Europäisches Patentamt

**European Patent Office**

Office européen des brevets

(19)

(11) Publication number: **0 065 325**
A2

(12) # EUROPEAN PATENT APPLICATION

(21) Application number: **82200479.2**

(22) Date of filing: **20.04.82**

(51) Int. Cl.³: **G 01 N 27/90**

(30) Priority: **11.05.81 US 262155**

(43) Date of publication of application: **24.11.82**
**Bulletin 82/47**

(84) Designated Contracting States: **DE FR GB NL**

(71) Applicant: **SHELL INTERNATIONALE RESEARCH MAATSCHAPPIJ B.V., Carel van Bylandtlaan 30, NL-2596 HR Den Haag (NL)**

(72) Inventor: **Schmidt, Thomas Rupert, 315 Greenpark, Houston Texas 77079 (US)**

(74) Representative: **Puister, Antonius Tonnis, Mr. et al, P.O. Box 302, NL-2501 CH The Hague (NL)**

(54) **Method and apparatus for detecting flaws in tubular metallic members.**

(57) A remote field eddy current method for detecting flaws in metallic members comprising: producing an alternating magnetic field in the member at a first position; detecting at a remote location a small circumferential section of the magnetic field resulting from said produced alternating magnetic field; individually analyzing each of said sections of the detected magnetic field; and displaying the results of said analyses.

A remote field eddy current apparatus for inspecting tubular members for defects, said apparatus comprising: a source coil coupled to an alternating current power source, said source coil being disposed to produce an alternating magnetic field in the tubular member; a detecting means disposed a remote distance from said source coil for detecting the remote field produced by said source coil, said detecting means being responsive to small segments of the remote field around the perimeter of the tubular member and producing an individual signal for each segment; processing means coupled to said detecting means for individually processing each of said individual signals; and display means coupled to said processing means for displaying at least one characteristic of each individually processed signal, said display means displaying said individual signals in a correlatable manner.

15.

14  10  12  11  13

ACTORUM AG

## METHOD AND APPARATUS FOR DETECTING
## FLAWS IN TUBULAR METALLIC MEMBERS

The invention relates to the detection of flaws such as corrosion or cracks in metallic members and in particular  to a remote field eddy current method and apparatus for detecting flaws in the metallic tubular members such as pipes and the like. Such an apparatus is located in and traverses the interior of a pipe which is usually the only accessible part of the pipe.

The term "remote field eddy current method" is used to describe the technique in which an alternating magnetic field is induced in the metallic member by an excitation or source coil and the field as modified by the metallic member is detected  at a remote location from the source coil. The detector must be spaced from the source coil a sufficient distance to eliminate direct coupling for the detected eddy currents to follow classic eddy current equations. From classic eddy current equations one can derive an equation illustrating that flux density at any depth will be attenuated and delayed in time (shifted in phase) in a manner related to metal thickness. In particular, eddy current instruments detect a flaw by measuring the reduced attenuation, time delay and field direction it produces as compared with a normal wall thickness. This perturbation in the inner wall electromagnetic field pattern caused by a flaw is, however, highly localized in the vicinity of the flaw and will, to a limited extent, outline the shape of the flaw.

Since the eddy current instrument responds to a flaw by detecting the inner wall electromagnetic field perturbation caused by the flaw, it is easy to see that the smaller the inner wall area being sampled by the electromagnetic field detector, the sharper the field perturbation will be defined.

2

Not only will the depth of the flaw be more exactly measured, but the outline of the flaw can be determined if a complete field scan is made. One method of decreasing the inner wall area being measured by a detector is known, in which a pick-up coil is divided into a plurality of individual segments. When this type of coil is used to inspect a tubular member, each segment of the coil sees only a fraction of the total tubular member. Thus, the ratio of the area of field measured near the flaw to total area being measured is reduced and the sensitivity of the instrument to flaws improved. While this known pick-up coil was an improvement over an existing single circumferential pick-up coil, it still had problems. For example, the above-mentioned known method describes a recording system in which only the most significant signal is recorded while the signals from the remaining pick-up coils are ignored and lost. Also, the known method describes the use of individual coils formed by several turns of wire and disposed around the circumference of the tubular member. This results in each individual coil seeing a rather large section of the tubular member and the detector assembly still misses several flaws in a tubular member. Also, the recording system in which only the most significant signal is recorded ignores the remaining signals which may contain information on the shape or pattern of the defect. This pattern may be vital in determining the type of defect encountered, and even in recognizing a defect in a normal background noise level in a pipe. For example, in the case where one surface, either the inner or outer of the tubular member, has been subjected to a uniform corrosion that results in numerous pits, the known system would indicate only the deepest pit at this location. This indication could also have just as well have been caused by a fatigue crack which is generally a far more serious situation. With a complete scan pattern available the situation can be easily recognized and the hazard evaluated. Thus, it is necessary to have the complete representation of the tubular member.

The present invention solves the problems of the known system and the method is characterized by the steps of producing an alternating magnetic field in the member at a first position; detecting at a remote location a small circumferential section of the magnetic field resulting from said produced alternating magnetic field; individually analyzing each of said sections of the detected magnetic field; and displaying the results of said analyses.

The apparatus of the invention is characterized by a source coil coupled to an alternating current power source, said source coil being disposed to produce an alternating magnetic field in the tubular member; a detecting means disposed a remote distance from said source coil for detecting the remote field produced by said source coil, said detecting means being responsive to small segments of the remote field around the perimeter of the tubular member and producing an individual signal for each segment; processing means coupled to said detecting means for individually processing each of said individual signals; and display means coupled to said processing means for displaying at least one characteristic of each individually processed signal, said display means displaying said individual signals in a correlatable manner. In particular, the invention provides a detector assembly having a plurality of small detectors. The detectors may be either small, individual coils having

4

ferrite cores or a coil alone; also, magneto diodes or Hall effect type sensors could be used. The signals from the individual detectors are separately processed and stored in a suitable memory. In the case of a short tubular member, the signals instead of being stored could be transmitted to a recording device located outside the tubular member. Of course, in the case of pipelines where the detecting system must be incorporated in a pig for passage through the pipeline, it will be necessary to store the signals for later processing. The signals are preferably supplied to a phase detecting system and the phase shift converted to a digital signal which can be stored. Also, if desired, the amplitude, phase and the direction of the field could be recorded or stored.

After the data are collected, they can be supplied to a computer which will arrange or format the signals in their proper position with respect to distance along and position around the circumference of the tubular member. The formatted signals can be recorded and the recording system may comprise a plurality of pen recorders in which the signal from each individual detector is recorded in a correlatable side-by-side manner. It is also possible to display the signal on a cathode ray tube and photograph the tube at proper intervals. In this manner, one could obtain a continuous record of flaws in the tubular member.

The present invention will now be described by way of example in more detail with reference to the accompanying drawings, in which:

Fig. 1 represents schematically a vertical section of a device constructed according to this invention for use in inspecting the interior of pipelines.

Fig. 2 represents an elevation view of one detector assembly constructed according to this invention.

Fig. 3 represents a vertical section of an alternate detector assembly.

Fig. 4 represents an example of a block diagram of one recording system that may be used with this invention.

Fig. 5 represents an example of a block diagram of one display system constructed according to this invention.

Fig. 6 shows the results of the display system of Fig. 5.

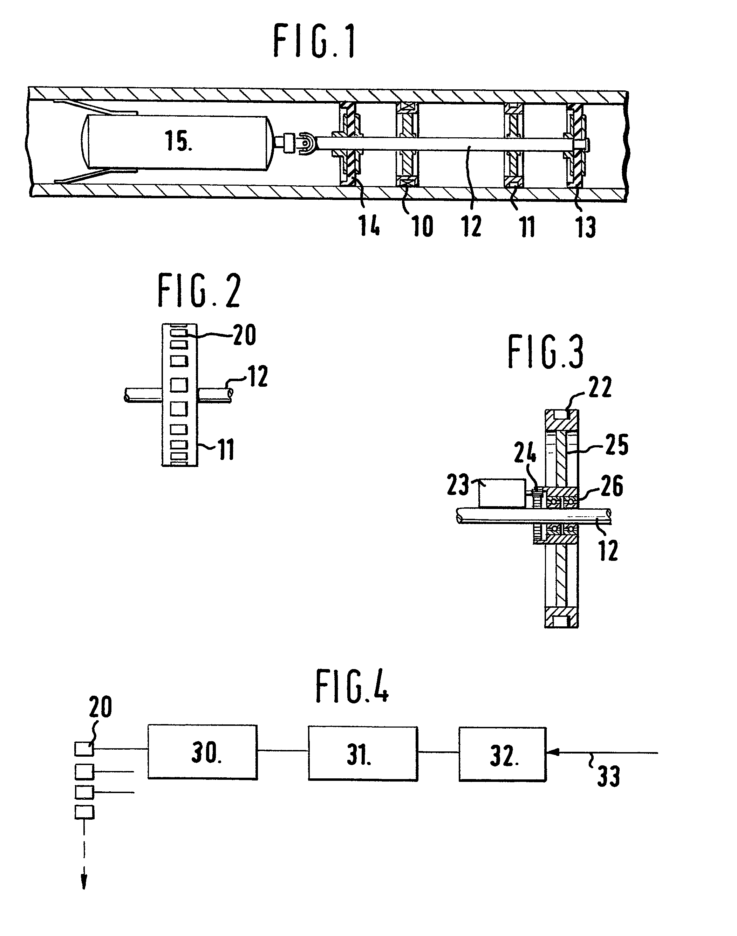

With reference now to Fig. 1, there is shown an instrument or pig constructed according to the present invention suitable for inspecting the interior of pipelines and other tubular members. The inspection device comprises a source coil 10 and a detector assembly 11 disposed on a structural member 12. The structural member 12 is fitted with suitable cups 13 and 14 so that it can be moved through the pipeline with the flow of fluid therethrough. Trailing behind the source coil detector assembly is an instrument package 15 which contains a power supply for the tool as well as a detecting and recording instrumentation. The construction of pipeline inspection tools as such is known to those skilled in the art and will not be described here in detail.

With reference to Fig. 2, there is shown a detailed drawing of a detector assembly that may be used with the instrument of Fig. 1. In particular, the detector assembly comprises a plurality of individual detectors 20 which are disposed around the periphery of the assembly. The number of individual detectors used will, of course, depend upon the diameter of the tubular member being inspected. A sufficient number of detectors should be used so that the diameter of the area inspected by each detector is not more than 3 or 4 times the diameter of the smallest defect in the tubular member being inspected by the detector assembly. For example, in the case of a 10-inch (25.4 cm) diameter pipe sixteen detectors would be used. Of course, the exact number of detectors used will depend to some extent upon the desired detail. The detectors may take various forms; for example, each may be an individual coil having a ferrite core. In this case, it would be necessary that the basic frame of the detector assembly be made from non-magnetic material such as stainless steel or suitable reinforced plastic materials. The detectors could also be magneto diodes or Hall effect sensors.

With reference to Fig. 3 there is shown a modified type of detector assembly in which a single detecting element 22 is mounted on an arm 25 which rotates on a bearing 26. A motor 23 and gear combination 24 is used to drive the arm 25. With this type of pick-up arrangement one would obtain a spiral inspection of the tubular member with the detail depending upon the speed of rotation of the detector and the speed of forward advance of the tool through the pipeline. The proper balancing of these two variables will provide a substantially complete inspection of the pipeline. The detector signal is sampled at uniform intervals to provide a plurality of signals substantially equal to the number of detectors used in the embodiment of Fig. 2.

With reference now to Fig. 4, there is shown an example of a block diagram for recording the information detected by the tool of Fig. 1. In particular, each individual detector 20 could be coupled to a phase detection circuit 30 wherein the phase of the detected signal would become compared with the phase of the signal used for energizing the source coil 10. The difference between the two phases would be supplied as an analogue signal to an analogue-to-digital converter 31 where it would be changed or converted to a digital signal. The digital signal can then be recorded on a memory storage 32 in a correlatable manner with a signal 33 indicating the distance that the tool has travelled through the pipeline. The memory storage 32 could be a conventional tape recording system in which the digital signals are recorded or it could be a solid state memory in which the signal would be recorded or stored until the tool was retrieved at a pump station.

The stored information could then be retrieved from the memory and utilized as explained below.

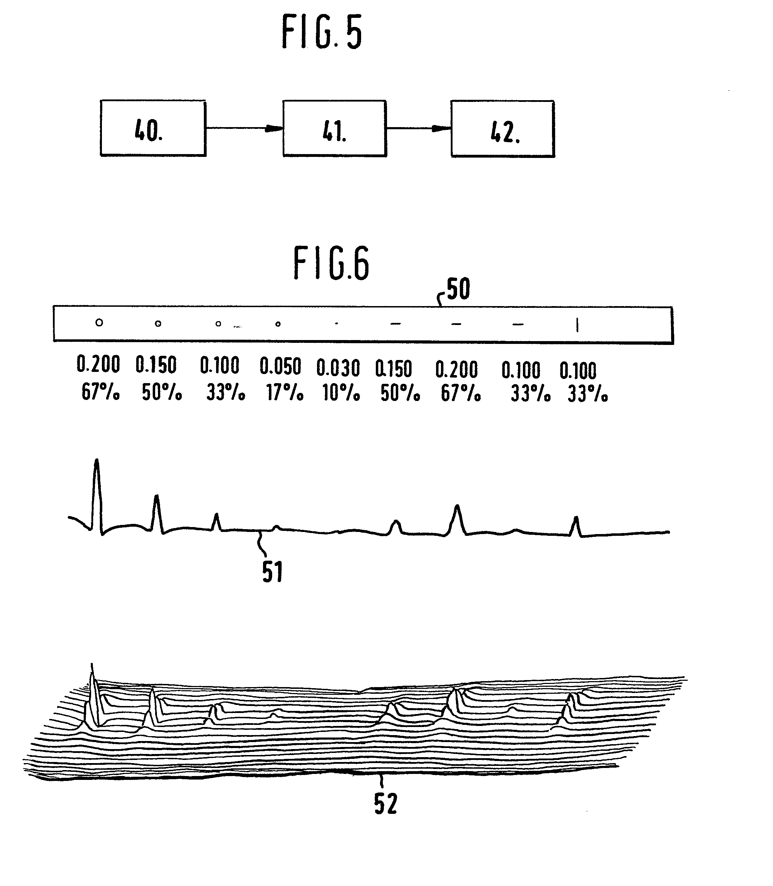

With reference to Fig. 5, there is shown an example of a circuit for reading out the memory storage of Fig. 4 and displaying it on a suitable recording system. Particularly, a memory-read out circuit 40 is utilized for reading the memory which then supplies the information to a computer 41. The computer 41 organizes or formats the stored information so that the signals from the individual detectors which corre_ spond to a particular position of the tool in the pipeline are arranged in a desired order. For example, the signals from a particular position could be arranged in a parallel order so that they could all be recorded on a recorder 42 simultaneously. In this manner, the signals could be displayed along the horizontal sweep of a cathode ray tube which is then photographed or otherwise recorded. This would provide a record that corresponded to the surface of the pipeline folded out flat. Also, the recorder could comprise a large number of pen recorders corresponding to the number of detectors in the detector assembly. In this manner, the individual signals would be recorded in a side-by-side relationship and again provide a record corresponding to the surface of the pipeline folded out flat.

With reference to Fig. 6 there is shown a section 50 of a 3-inch (7.6 cm) diameter pipe having a 0.300-inch (0.76 cm) thick wall with simulated defects on its outer surface. In particular, to the left are shown a series of depressions made with a ball-shaped milling tool having diameters as indicated and depths in percentages of the total wall thickness of the pipe. Reference number 51 indicates the trace of a detector which was positioned in the interior of the pipe and directly under the simulated defects. The signal shows the phase difference between the detector signal and the signal used for energizing the source coil. The detector used in the tool comprised a small coil of wire having a ferrite coil. The display 52 illustrates the signals from the individual detectors such as that shown by reference number 51 recorded in a side-by-side arrangement.

While only a single recording method is shown, obviously other variants are possible. The important requirement of a recording system is that it displays the information from all of the detectors in an individual manner so that all of the data can be inspected to locate defects or flaws in the tubular member. Also, it is important that a sufficient number of detectors be used to provide the detail required for the inspection. As explained above, each detector should inspect a span of no more than 3 or 4 diametres of the smallest flaw of interest.

While the invention will produce satisfactoy results with any type of metallic member, it is particularly adapted for the detection of flaws in ferrous metals. When it is desired to detect flaws in non-ferrous materials it is necessary to operate at higher frequencies.

Various modifications of the invention will become apparent to those skilled in the art from the foregoing description and accompanying drawings. Such modifications are intended to fall with the scope of the appended claims.

C L A I M S

1. A remote field eddy current method for detecting flaws in metallic members, characterized by the steps of: producing an alternating magnetic field in the member at a first position; detecting at a remote location a small circumferential section of the magnetic field resulting from said produced alternating magnetic field; individually analyzing each of said sections of the detected magnetic field; and displaying the results of said analyses.

2. The method as claimed in claim 1, characterized in that said circumferential sections are chosen so that the smallest defect to be detected has at least one dimension that is less than the corresponding dimension of the circumferential section.

3. The method as claimed in claim 1, characterized in that said analyzing comprises determining the phase difference between the detected signal and the produced magnetic field.

4. The method as claimed in claim 3, characterized in that the phase difference signals for each section are displayed as a continuous curve, the continuous curves for each section being displayed in a correlatable manner with respect to the adjacent curves.

5. A remote field eddy current apparatus for inspecting tubular members for defects, characterized by a source coil coupled to an alternating current power source, said source coil being disposed to produce an alternating magnetic field in the tubular member; a detecting means disposed a remote distance from said source coil for detecting the remote field produced by said source coil, said detecting means being responsive to small segments of the remote field around the perimeter of the tubular member and producing an individual signal for each segment; processing means coupled to said detecting means for individually processing each of said individual signals; and display means coupled to said processing means for displaying at least one characteristic of each individually processed signal, said display means displaying said individual signals in a correlatable manner.

6.  The apparatus as claimed in claim 5, characterized in that said detecting means comprises a series of individual detectors arranged to scan the entire perimeter of the tubular member.

7.  The apparatus as claimed in claim 5, characterized in that said detecting means comprises a single detector disposed to be moved along the perimeter of the tubular member, and in addition, circuit means for sensing said detector signal at a plurality of predetermined intervals, said intervals being chosen to provide a series of signals representing the detector's response to small contiguous segments of said perimeter.

8.  The apparatus as claimed in any one of claims 6 or 7, characterized in that said processing means determines the phase difference between the alternating current power source and the individual signals.

9.  The apparatus as claimed in any one of claims 6 or 7, characterized in that the processing means determined the amplitude difference between the alternating current power source and the individual signals.

10.  The apparatus as claimed in any one of claims 6 or 7, characterized in that the processing means determines the difference in direction of the magnetic field between the field induced by said source coil and the field detected by said detecting means.

FIG.1

15.

14  10  12  11  13

FIG.2

20
12
11

FIG.3

22
24  25
23  26
12

FIG.4

20

30.    31.    32.
33

0065325

# FIG.5

| 40. | → | 41. | → | 42. |

# FIG.6

50

| o | o | o | o | . | — | — | — | I |

| 0.200 | 0.150 | 0.100 | 0.050 | 0.030 | 0.150 | 0.200 | 0.100 | 0.100 |
| 67% | 50% | 33% | 17% | 10% | 50% | 67% | 33% | 33% |

51

52